# EUROPÄISCHE PATENTSCHRIFT

(11) **EP 2 637 362 B1**
(45) Veröffentlichungstag und Bekanntmachung des Hinweises auf die Patenterteilung: **11.01.2017**
(21) Anmeldenummer: 13158008.6
(22) Anmeldetag: 06.03.2013
(51) Int. Cl.: H04L 12/40, G06F 13/42, H04L 1/22, H04L 1/00

(54) **BUSTEILNEHMER-EINRICHTUNG ZUM ANSCHLUSS AN EINEN LINIENREDUNDANTEN, SERIELLEN DATENBUS UND VERFAHREN ZUR STEUERUNG DER KOMMUNIKATION EINES BUSTEILNEHMERS MIT EINEM LINIENREDUNDANTEN, SERIELLEN DATENBUS**
Bus participant device for connection to a line-redundant, serial data bus and method for controlling the communication of a bus participant with a line-redundant, serial data bus
Dispositif de participant bus pour le raccordement à un bus de données série à lignes redondantes et procédé de commande de la communication d'un participant bus avec un bus de données série à lignes redondantes

(30) Priorität: 08.03.2012 DE 102012101957
(43) Veröffentlichungstag der Anmeldung: 11.09.2013
(73) Patentinhaber: Softing AG, 85540 Haar (DE)
(72) Erfinder: Luttenbacher, Josef, 82497 Unterammergau (DE)
(74) Vertreter: Karl, Christof

(56) Entgegenhaltungen:
- WO-A1-98/14853
- DE-A1-102010 015 455
- US-A1- 2010 290 339
- US-B1- 6 594 227
- US-B1- 6 973 029

## Beschreibung

Die Erfindung betrifft eine Busteilnehmer-Einrichtung zum Anschluss an einen linienredundanten, seriellen Datenbus und ein Verfahren zur Steuerung der Kommunikation eines Busteilnehmers mit einem linienredundanten, seriellen Datenbus.

Die Erfindung betrifft allgemein das Gebiet der Kommunikation auf Feldbussen, die als serielle asynchrone Datenbusse realisiert sind. Die Erfindung ist insbesondere anwendbar auf Feldbussysteme, wie PROFIBUS, Fieldbus Foundation, CAN (Controller Area Network), aber auch Ethernet und andere. Ein Feldbus verbindet in einer Anlage Feldgeräte, wie Sensoren und Aktoren, zur Kommunikation mit einem Steuergerät. Die Kommunikation erfolgt über busspezifische Telegramme, die in einem busspezifischen Protokoll festgelegt sind. In der Regel umfasst ein Feldbussystem wenigstens ein Master-Feldgerät (Master) zur Steuerung der Anlage sowie eine Vielzahl von Slave-Feldgeräten (Slaves).

Zur Erhöhung der Verfügbarkeit von Feldbussystemen ist es bekannt, Linienredundanz, Master-Redundanz und/oder Slave-Redundanz in beliebiger Kombination vorzusehen.

Linienredundanz bedeutet, dass der Feldbus mit wenigstens zwei parallelen, redundanten Leitungen oder Linien A und B realisiert ist. Bei der Linienredundanz werden die Busleitungen für die Applikation somit transparent doppelt ausgelegt. Dadurch kann der Ausfall einer Buslinie ohne Einschränkung der Funktionalität toleriert werden.

Master-Redundanz wird in der Regel realisiert, indem das Feldbussystem mit einem primären Master und einem Backup-Master aufgebaut wird, die beide mit beiden Linien A und B verbunden sind, sofern der Feldbus auch linienredundant ist. Dies impliziert eine vollständige Duplizierung des Masters. Der redundante Master ist aus Sicht des Anwenders transparent, wird also im Normalbetrieb nicht wahrgenommen, und unabhängig vor einer eventuell vorhandenen Linienredundanz. Existierende Slaves können ohne Modifikation eingesetzt werden und werden vom einen oder dem anderen Master bedient. Eine Umschaltung zwischen den Mastern erfolgt unterbrechungsfrei und ohne Verlust von Prozessdaten oder einer Neuinitialisierung des Busses. Damit wird gewährleistet, dass Ausgänge der Slaves nicht abfallen und der Betrieb ohne Unterbrechung oder Störung fortgesetzt werden kann. Ein defekter Master kann jederzeit gefahrlos ersetzt werden. Eine neu eingefügte Baugruppe gleicht sich automatisch ab und ist nach kurzer Zeit wieder verfügbar. Es ist immer genau ein Master aktiv, der redundante Master dient als Backup für den Fall, dass der primäre Master ausfällt.

Slave-Redundanz bedeutet z.B. nach der PROFIBUS-Norm, dass jeder Slave Schnittstellenmodule für alle redundanten Strukturen, also z.B. zwei Schnittstellenmodule für einen linienredundanten Feldbus mit zwei Linien A und B aufweist. Zusätzlich weist der Slave einen Redundanz-Kommunikationskanal (RedCom) auf. Redundante Slaves umfassen somit eine primäre Kommunikationsschnittstelle und eine Backup-Kommunikationsschnittstelle, denen jeweils eine eigene, unterschiedliche Busadresse zugeordnet ist. Der Master kommuniziert immer mit der primären Kommunikationsschnittstelle und nur in eingeschränktem Maße mit der Backup-Kommunikationsschnittstelle. Bei PROFIBUS z. B. darf immer nur eine Slave-Schnittstelle aktiv im Sinne einer Nutzdatenübertragung sein. Bei Ausfall nur einer PROFIBUS-Leitung oder nur eines Anschlusses wird die Kommunikation mit der anderen Slave-Schnittstelle ohne Einfluss auf die Prozessausgänge wieder aufgenommen. Beide Kommunikationsschnittstellen führen eine Eigendiagnose durch und senden ihre Diagnoseinformation an den Master, wobei die Diagnoseinformation der Backup-Schnittstelle in die Diagnose der primären Schnittstelle eingeschlossen und über diese gesendet wird.

Der Master weist eine Redundanz-Erweiterung zur Überwachung der Kommunikationsfähigkeit des redundanten Slaves auf. Sofern die Redundanzerweiterung des Masters eine Störung in der Kommunikation mit der primären Slave-Schnittstelle feststellt, sendet er einen Befehl an die Backup-Kommunikationsschnittstelle, so dass auf diese umgeschaltet wird. Zusätzlich kann ein redundanter Slave seine internen, nicht auf die Kommunikation mit dem Feldbus bezogenen Komponenten auf bestimmte Fehlerzustände überwachen und von dem primären auf den Backup-Kommunikationskanal umschalten, wenn ein interner Fehler erfasst wird. Die Überwachung von Störungen in der Kommunikation erfolgt immer über den Master.

Während des Betriebs ist grundsätzlich immer nur eine der Kommunikationsschnittstellen des Slaves aktiv, sei es die primäre oder die Backup-Kommunikationsschnittstelle, und nur eine Schnittstelle wird konfiguriert. Beim Umschalten von einer auf die andere Schnittstelle kann die neue Schnittstelle alle notwendigen Daten über den Redundanz-Kommunikationskanal Red-Com empfangen, oder sie muss auf den ersten Datenaustausch nach dem Umschalten mit dem Master-Feldgerät warten. Dies kann zu unerwünschten Verzögerung führen, weil diese Art der Redundanz zwei komplett getrennte Busanschaltungen erfordert. Diese und weitere Einzelheiten der Slave-Redundanz bei Profibus sind beschrieben in der Spezifikation "Slave Redundancy", Version 1.2, November 2004, veröffentlicht von Profibus-Nutzerorganisation e.V. (www.profibuscentre.com.au/ducs/slave-redundancy.pdf).

Im Stand der Technik ist es auch bekannt, serielle Bussysteme ohne systemintegrierte Redundanzmittel mit einer vorschaltbaren Redundanz-Erweiterung zu versehen. Hierzu dient beispielsweise das Profibus Redundancy Link Module RLM01 der ABB AG, Mannheim, DE (http://www.abb.de/product/seitp334/289cb36695cb150dc12571c6002e1c0b.aspx), das auch in der EP 0 990 330 B1 beschrieben ist. Diese Redundanz-Erweiterung ist ein Vorschaltgerät, das zwischen ein nicht redundantes Master- oder Slave-Feldgerät und einen linienredundanten seriellen Bus, mit zwei Linien A und B, eingefügt werden kann. Das Modul regeneriert die Signalform und Amplitude aller empfangenen Daten und überwacht alle Linien auf Aktivität und Fehlerzustände. Die in einem linienredundanten seriellen Bus über Linie A oder Linie B zuerst eintreffenden Daten mit korrektem Telegrammanfang werden von dem Redundanz-Erweiterungsmodul über einen Anschluss M an das Master- oder Slave-Feldgerät weitergeleitet. Bei einem fehlerhaften Telegrammanfang eines auf Linie A gesendeten Datenframes wird auf die noch verfügbare redundante Linie B umgeschaltet, und umgekehrt. Von den Feldgeräten über das Redundanz-Erweiterungsmodul auf den Bus gesandte Datenblöcke werden parallel zu den beiden Linien A und B durchgereicht. Ein Nachteil dieses bekannten Vorschaltgerätes ist zunächst, dass zusätzlich ein separates, unhandliches Gerät in die Feldbusanlage eingebaut werden muss, das zudem eine eigene Stromversorgung sowie die manuelle Einstellung der Bitrate benötigt.

Ferner führt das Vorschaltgerät eine zusätzliche Verzögerung in die Datenübertragung ein, die sich ähnlich wie eine zusätzliche Laufzeitverzögerung auswirkt. Das Vorschaltgerät benötigt nämlich eine gewisse Verarbeitungszeit zum Empfangen und Auswerten der Daten, um die richtige Empfangslinie auszuwählen. Hierfür ist der Empfang wenigstens eines Bytes notwendig, wodurch z.B. nach der PROFIBUS-Norm eine Latenzzeit von mindestens 11 BitZeiten eingeführt wird. Erst nachdem das Redundanz-Erweiterungsmodul entschieden hat, welche Linie A oder B als Empfangslinie ausgewählt wird, werden die Daten an die eigentlichen Feldgeräte weitergeleitet. Bei Kommunikation zwischen Master und Slave, die wenigstens das Senden eines Befehls von dem Master an den Slave und das Zurücksenden einer Antwort von dem Slave an den Master umfasst, ergibt sich somit eine Verzögerung von zwei mal der für die Verarbeitung eines Datenframes notwendigen minimalen Zeit, im Falle von PROFIBUS 2 x 11 Bit. Abhängig von der Übertragungsrate, die bei PROFIBUS z.B. im Bereich von 1,5 kBaud bis 12 MBaud liegen kann, ergeben sich hieraus Verzögerungszeiten in der Größenordnung von einigen Mikrosekunden. Die Verzögerung von 11 Bitzeiten pro Empfangsvorgang liegt in derselben Größenordnung wie die normale Antwortzeit der Station, d.h. die Antwortzeit wird de facto verdoppelt. Solche Verzögerungen können bei zeitkritischen Prozesssteuerungen durchaus relevant sein.

Das System von ABB hat den weiteren Nachteil, dass es nur jeweils den Anfang eines Datenframes auf Kommunikationsfehler untersucht und Störungen, die nach dem ersten Charakter einer Nachricht auftreten, nicht mehr berücksichtigt. Andererseits würde bei diesem System eine umfassendere Analyse der empfangenen Datenblöcke zu einer noch größeren Verzögerung führen, was ebenfalls nachteilig wäre. Wenn nämlich ein Datenblock, also z.B. ein Telegramm, vollständig auf Fehler untersucht werden soll, bevor die Linienauswahl getroffen wird, dann muss er vor seiner Weiterleitung vollständig empfangen werden. Die verursachte Verzögerung würde der Länge des Telegramms entsprechen, was in vielen Fällen vom Protokoll nicht mehr toleriert würde.

US 6,973,029 B1 offenbart einen redundanten Serienbus und ein Verfahren zu dessen Betrieb. Dabei wird ein vorschaltbares Redundanzmittel vorgeschlagen, um für sich bekannte serielle Bussysteme ohne systemintegrierte Redundanzmittel durch redundant ausgeführte Buslinien miteinander zu verbinden. Das vorschaltbare Redundanzmittel wird zwischen die Buskommunikations-Schnittstelle eines Busteilnehmers und die redundanten Buslinien geschaltet. Dabei wird im laufenden Betrieb stets auf allen Buslinien gesendet und empfangsseitig eine störungsfreie Buslinie ausgewählt.

US-A-6,594,227 beschreibt ein System zur Steuerung der Kommunikation zwischen verschiedenen Stationen über einen linienredundanten Ethernet-Bus gemäß dem TCP/IP-Protokoll durch eine spezielle Verwaltung der MAC-Adressen eines Empfängers, eines Senders und eines Netzwerkadapters.

Die US-A-2010/0290,339 beschreibt ebenfalls ein Ethernet-Netzwerk, wobei Redundanz dadurch geschaffen wird, dass Anschlüsse doppelt vorgesehen und jeweils alternativ mit derselben Netzwerkadresse ansprechbar sind.

Die DE 10 2010 015 455 A1 offenbart ein Verfahren zur redundanten Verbindung eines Feldgerätes mit einem Feldbus, bei dem ebenfalls die Netzwerkschnittstellen redundant ausgebildet sind. Auch hier erfolgt die Ansteuerung der Geräte durch spezielle Verwaltung der MAC-Adressen.

Es ist eine Aufgabe der Erfindung, die oben genannten Nachteile des Standes der Technik zu überwinden. Die Erfindung soll es ermöglichen, einen Busteilnehmer mit einem linienredundanten, seriellen Datenbus, insbesondere einem Feldbus, zu verbinden und im Betrieb eine geeignete Linie des Datenbusses mit optimaler Übertragungsqualität auszuwählen, ohne dass hierdurch Verzögerungen auftreten. Ein zusätzliches Vorschaltgerät sollte möglichst vermieden werden.

Diese Aufgabe wird erfindungsgemäß durch eine Busteilnehmer-Einrichtung gemäß Patentanspruch 1 sowie durch ein Verfahren nach Patentanspruch 6 gelöst. Bevorzugte Ausführungen der Erfindung sind in den abhängigen Ansprüchen angegeben.

Die Erfindung sieht eine Busteilnehmer-Einrichtung zum Anschluss an einen linienredundanten, seriellen Datenbus vor, über den Daten nach einem vorgegebenen Protokoll ausgetauscht werden. Bevorzugte Ausführungsformen der Erfindung finden Anwendung in Feldbussystemen, die eine asynchrone Datenübertragung realisieren, wie PROFIBUS sowie die eingangs genannten und andere Feldbussysteme. Die Busteilnehmer-Einrichtung umfasst eine Datensendeeinheit, wenigstens zwei Datenempfangseinheiten, die parallel geschaltet sind, eine Linienauswahl-Logik und wenigstens zwei Buskommunikations-Schnittstellen zur Verbindung mit einer entsprechenden Anzahl von Linien eines linienredundanten Datenbusses. Erfindungsgemäß wird jede der Datenempfangseinheiten über eine zugeordnete Buskommunikations-Schnittstelle mit einer zugeordneten Linie des Datenbusses verbunden. Die Datenempfangseinheiten weisen Mittel zum Empfangen eines Datenblocks von der zugeordneten Linie des Datenbusses und Mittel zum Weiterleiten des empfangenen Datenblocks an die Linienauswahl-Logik auf. Die Linienauswahl-Logik weist ihrerseits Mittel zum Auswählen einer Linie des Datenbusses als Empfangslinie und Mittel zum Weiterleiten des über die ausgewählte Empfangslinie empfangenen Datenblocks auf. Die Funktionsgruppen der Busteilnehmer-Einrichtung können als Hardware, Firmware oder Software oder eine Kombination hieraus realisiert sein.

Anstelle der oben beschriebenen separaten Vorschaltkomponente, wie in dem System von ABB, und der extern gesteuerten Umschaltung der Kommunikationskanäle des oben beschriebenen redundanten Slaves gemäß der PROFIBUS-Norm, schafft die Erfindung einen PROFIBUS-Teilnehmer mit integrierter Linienauswahl, der also autark Linienredundanz eines seriellen Datenbusses unterstützt. Die erfindungsgemäße Busteilnehmer-Einrichtung ist so konfiguriert, dass sie parallel an beiden Datenempfangseinheiten Datenpakete empfangen und durch Analyse der Datenpakete erkennen kann, welche Linie des Datenbusses die bessere Empfangsqualität bietet. Diese Linie wird dann als Empfangslinie ausgewählt. Kriterien für die Auswahl der Empfangslinie sind beispielsweise Protokollverletzungen, die in Datenblöcken erkannt werden, welche an den beiden Datenempfangseinheiten empfangen werden, oder auch unterschiedliche Laufzeitverzögerungen auf den verschiedenen Linien des redundanten Datenbusses.

Die Linienauswahl-Logik ist in einer vorteilhaften Ausführungsform der Erfindung in einem in dem Busteilnehmer ohnehin enthaltenen Datenprozessor implementiert. Anders als das oben beschriebene System von ABB führt die Erfindung somit keine zusätzliche Verzögerung in die Datenverarbeitung oder den Datenempfang ein, weil jeder Datenblock ohne Zwischenschaltung eines Vorschaltgerätes unmittelbar von dem adressierten Busteilnehmer empfangen und ohne zusätzliche Verzögerung an die in dem Datenprozessor implementierte Linienauswahl-Logik weitergeleitet wird.

In der bevorzugten Ausführung der Erfindung weisen die Datenempfangseinheiten Mittel zur Auswertung der empfangen Datenblöcke und Ausgeben eines Datenblock-Statussignals, neben den eigentlichen in dem Datenblock enthaltenen Daten, auf. Vorzugsweise entspricht diese Auswertung der empfangenen Datenblöcke der üblichen Vorverarbeitung der Daten in der Empfängereinheit eines Feldbus-Gerätes, insbesondere der Prüfung der empfangen Datenblöcke auf Protokollverletzungen der Schicht 2 des OSI-Schichtenmodells. Sobald der Datenprozessor einen Datenblock empfängt, welcher keine Protokollverletzung aufweist, löst dies einerseits die Auswahl der Linie des Datenbusses, über die der fehlerfreie Datenblock empfangen wurde, als Empfangslinie aus, andererseits kann der empfangene Datenblock dann auch ohne zusätzliche Verzögerung bestimmungsgemäß verarbeitet werden. Empfang, Pufferung und Weiterleitung der Datenblöcke in den Datenempfangseinheiten erfolgt gemäß der üblichen Arbeitsweise solcher Empfangseinheiten in Busteilnehmern, wobei die erfindungsgemäße Busteilnehmer-Einrichtung sich vom Stand der Technik durch die Verdoppelung der Datenempfangseinheiten sowie durch die zusätzliche Auswertung der empfangenen Datenblöcke zur Linienselektion unterscheidet. Die Erfindung nutzt somit die in üblichen Feldgeräten vorhandenen Komponenten und Intelligenz und passt sich an die üblichen Verarbeitungsprozesse der Feldgeräte an. Es ist lediglich notwendig, die Datenempfangseinheit des Feldgerätes zu verdoppeln und den Schritt der Protokollprüfung, der an und für sich in der Verarbeitung der Datenblöcke schon ausgeführt wird, zur Linienselektion zu nutzen.

Im einfachsten Fall bedeutet dies, dass ein Datenblock, welcher keine Protokollverletzungen enthält und als erstes bei einer der Datenempfangseinheiten und somit bei der Linienauswahl-Logik ankommt, bewirkt, dass die zugehörige Linie als Datenlinie ausgewählt wird. Diese Auswahl der Linie des Datenbusses wird, soweit es den Empfang von Datenblöcken betrifft, für jeden empfangenen Datenblock erneut getroffen, ohne dass hierdurch irgendeine zusätzliche Verzögerung entsteht. In der Praxis entspricht ein Datenblock in der Regel genau einem Datenframe oder einem Datenpaket gemäß einem ausgewählten Netzwerkprotokoll. Die Auswertung erfolgt dann jeweils nach Empfang eines vollständigen Datenpakets.

In der bevorzugten Ausführung der Erfindung umfasst die Busteilnehmer-Einrichtung wenigstens zwei Timereinrichtungen, die den wenigstens zwei Datenempfangseinheiten zugeordnet sind. Jede Datenempfangseinheit weist also vorzugsweise ihre eigene Timereinrichtung auf, um die Datenübertragung tatsächlich ohne jede Verzögerung, asynchron durchzuführen, wie unten noch näher erläutert ist.

In dieser bevorzugten Ausführung der Erfindung arbeitet die Datensendeeinheit wie folgt: Grundsätzlich ist die Datensendeeinheit über die Buskommunikations-Schnittstellen mit allen Linien des Datenbusses verbunden und sendet Daten gleichzeitig auf alle Linien, z.B. Linie A und B, des Datenbusses. Erfindungsgemäß ist der Datenprozessor so eingerichtet, dass er abhängig von dem Ergebnis der Auswertung und somit abhängig von der ausgewählten Empfangslinie der Datensendeeinheit die Timereinrichtung zuordnet, die zu der Datenempfangseinheit gehört, über die der vorhergehende ausgewählte Datenblock empfangen wurde. Der Datenprozessor steuert also die Datensendeeinheit so, dass sie mit demselben Takt arbeitet, wie die zuvor ausgewählte Datenempfangseinheit. Das Vorsehen von separaten Timereinrichtungen für die Datenempfangseinheiten ermöglicht es daher nicht nur, dass die Datenempfangseinheiten parallel und unabhängig voneinander arbeiten, ohne irgendeine zusätzliche Verzögerung für den doppelten Empfang der Datenblocks einzuführen, sondern es ermöglicht auch, die Datensendeeinheit auf den Timer der ausgewählten Datenempfangseinheit zu synchronisieren und somit die von dem Feldgerät für das Senden von Antwortsignalen einzuhaltende Latenzzeit zu minimieren.

Erfindungsgemäß sind die Datenempfangseinheiten vorzugsweise dazu eingerichtet, jeweils einen vollständigen Datenframe oder ein vollständiges Datenpaket zu empfangen und zu puffern, und die Mittel zum Auswählen einer Datenlinie sind so konfiguriert, dass sie erst nach Auswertung wenigstens eines vollständigen Datenframes oder Datenpakets eine Linie der Datenbusse als Empfangslinie auswählen, um die auf dieser Linie empfangenen Daten an den Datenprozessor weiterzuleiten. Ein Datenpaket, auch als Datenframe bezeichnet, ist abhängig von dem geltenden Datenübertragungsprotokoll in der Regel gekennzeichnet durch einen Header, Daten-Bytes und einen Trailer. Der Header kann ein SoF (Start of Frame)-Byte, Kontroll-Bytes, Ziel, Quelle, Länge des Frames und ähnliches enthalten. Der Trailer enthält in der Regel ein oder mehrere Prüf-Bytes und z.B. ein EoF (End of Frame)-Byte. Anders als der Stand der Technik analysiert die Erfindung immer einen vollständigen Datenblock oder Datenframe auf Protokollverletzungen und nicht nur z.B. den ersten Charakter oder das erste Byte. Zusätzliche Verzögerungen entstehen hierdurch jedoch nicht, weil die Datenempfangseinheiten üblicherweise jeweils einen vollständigen Datenframe puffern, bevor er an den Datenprozessor weitergegeben wird.

Die erfindungsgemäße Busteilnehmer-Einrichtung kann die in solchen Geräten üblicherweise vorhandene Bitratenerkennung nutzen, um parallel für beide Linien des Datenbusses die Übertragungs-Bitraten zu ermitteln. Eine gesonderte Einstellung der Bitrate an den jeweiligen Geräten ist nicht notwendig.

Den erfindungsgemäßen Busteilnehmer-Einrichtungen werden trotz Verdopplung der Datenempfangseinheiten jeweils nur genau eine Busadresse zugeordnet, jede Busteilnehmer-Einrichtung wird also als ein einziges Feldgerät angesprochen, anders als bei den im Stand der Technik üblichen redundanten Master- oder Slave-Geräten. Dies erleichtert erheblich die Verwaltung der Busteilnehmer. Die Erfindung kann sowohl in Master- als auch in Slave-Feldgeräten zum Einsatz kommen.

Die Erfindung sieht auch ein Verfahren zur Steuerung der Kommunikation eines Busteilnehmers mit einem linienredundanten, seriellen Datenbus vor.

Bei dem erfindungsgemäßen Verfahren werden Daten regelmäßig an beiden Datenempfangseinheiten parallel empfangen und über die Datensendeeinheit parallel auf alle Linien des redundanten Busses gesendet. Die erfindungsgemäße Auswertung und Auswahl der Datenblöcke ist oben beschrieben.

In einer Ausgestaltung der Erfindung kann aber auch eine der Linien des Datenbusses als Default-Empfangslinie voreingestellt werden, wobei auf eine andere Linie des Datenbusses umgestellt wird, sobald auf der Default-Empfangslinie eine Protokollverletzung festgestellt oder auf der anderen Linie ein intaktes Datenpaket früher empfangen wird. Sowohl Protokollverletzungen als auch eine Verzögerung im Empfang von Datenpaketen können auf vorübergehende oder dauerhafte Störungen einer Linie des Datenbusses hinweisen. Selbst ohne Störungen stellt das erfindungsgemäße Verfahren jedoch sicher, dass immer das "schnellste" Datenpaket, also dasjenige das als erstes bei einer der duplizierten Empfangseinheiten ankommt, zur Weiterverarbeitung durch den Datenprozessor ausgewählt wird. Dadurch wird der Betrieb des Feldbussystems sowohl hinsichtlich seiner Zuverlässigkeit als auch hinsichtlich seiner Geschwindigkeit optimiert.

Sofern an beiden Datenempfangseinheiten gestörte Datenblöcke empfangen werden, z.B. Datenblöcke, welche Protokollverletzungen aufweisen, wird eine entsprechende Fehlermeldung zum Datenprozessor gesendet.

Zu Diagnose- und Testzwecken kann jeweils eine der Datenempfangseinheiten deaktiviert werden. Auch ohne eine solche Deaktivierung kann die erfindungsgemäße Busteilnehmer-Einrichtung Information über die Empfangsqualität auf beiden Linien zur Verfügung stellen, wenn der Datenprozessor entsprechende Auswertungen durchführt und deren Ergebnisse ausgibt.

Die Erfindung ist im Folgenden anhand eines Ausführungsbeispiels mit Bezug auf die Zeichnungen näher erläutert. In den Figuren zeigen:

### In den Figuren zeigen:

- Fig. 1: eine schematische Darstellung einer Bustopologie eines linienredundanten Feldbussystems mit Master- und Slave-Feldgeräten gemäß der Erfindung, und
- Fig. 2: ein schematisches Blockdiagramm einer Busteilnehmer-Einrichtung gemäß der Erfindung.

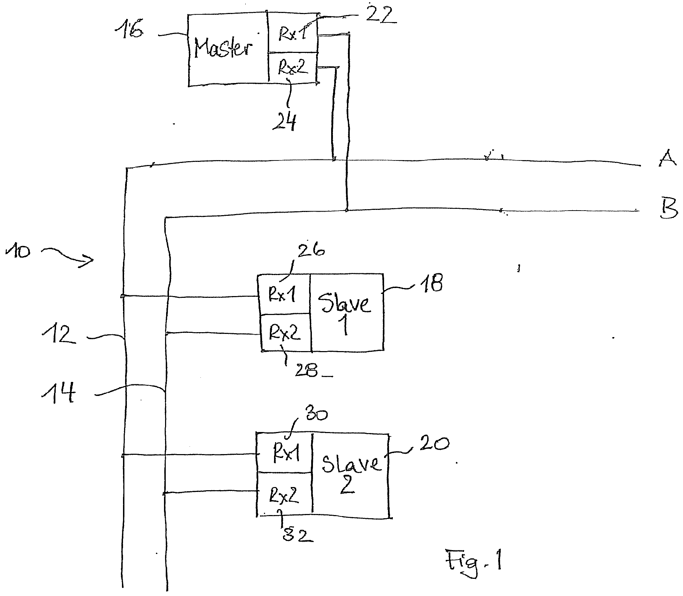

Ein beispielhafter Anwendungsfall für die Erfindung ist ein PROFIBUS-Netzwerk, wobei die Erfindung auch auf andere linienredundante asynchrone serielle Busse, insbesondere Feldbussysteme anwendbar ist. Das in Fig. 1 gezeigte Bussystem umfasst einen linienredundanten Feldbus 10 mit zwei Linien 12 und 14, die in der Figur auch mit A und B bezeichnet sind. In dem gezeigten Ausführungsbeispiel sind an die Linien A und B ein Master-Feldgerät 16, im Folgenden auch kurz als Master bezeichnet, und zwei Slave-Feldgeräte 18, 20, im Folgenden auch kurz als Slave bezeichnet, angeschlossen. Alle Feldgeräte 16, 18, 20 sind in dem gezeigten Ausführungsbeispiel als erfindungsgemäße Busteilnehmer-Einrichtungen konfiguriert und weisen jeweils zwei parallele Datenempfangseinheiten 22, 24, 26, 28, 30 und 32 auf. Jeweils eine der Empfangseinheiten 22, 26, 30 der Feldgeräte 16, 18, 20 ist mit der Linie A verbunden, und die andere Empfangseinheit 24, 28, 32 ist mit der Linie B verbunden. Beide Empfangseinheiten jeweils eines Feldgerätes 16, 18, 20 werden erfindungsgemäß über dieselbe Adresse auf dem Feldbus 10 angesprochen.

Während Fig. 1 drei Feldgeräte zeigt, die erfindungsgemäß konfiguriert sind, liegt es auch im Bereich der Erfindung, nur einen Teil der Feldgeräte erfindungsgemäß zu konfigurieren. Beispielsweise ist es möglich, zwei vollständig separate, redundante Master-Feldgeräte vorzusehen, wie aus dem Stand der Technik bekannt, und nur die Slave-Feldgeräte oder auch nur ein Teil der Slave-Feldgeräte erfindungsgemäß mit zwei Datenempfangseinheiten zu konfigurieren. Ferner ist es auch möglich, zwei redundante Master-Feldgeräte vorzusehen, die erfindungsgemäß konfiguriert sind oder auch redundante und nicht-redundante Geräte zu kombinieren.

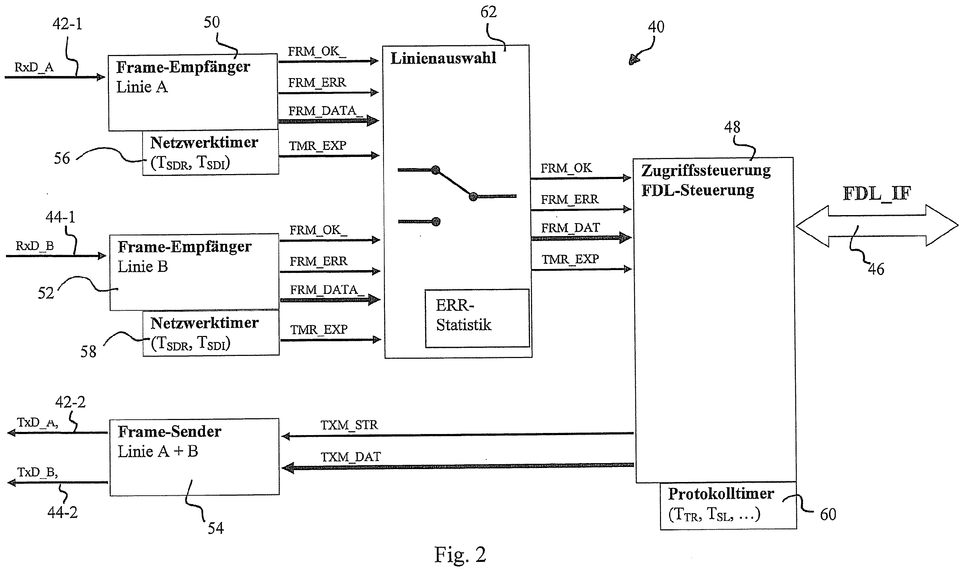

Fig. 2 zeigt in Form eines schematischen Blockdiagramms den Aufbau einer erfindungsgemäßen Busteilnehmer-Einrichtung 40, die als Master oder als Slave eingesetzt werden kann. Die Einrichtung 40 umfasst zwei Busschnittstellen 42-1, 42-2 und 44-1, 44-2 zum Anschließen der redundanten Linien A, B des linienredundanten Feldbusses 10 sowie eine Schnittstelle 46 zur Verbindung mit einer übergeordneten Steuereinrichtung, beispielsweise einer Prozess-Steuerungseinheit, wie einer speicherprogrammierbaren Steuerung (SPS). Sofern die erfindungsgemäße Busteilnehmer-Einrichtung 40 als Slave implementiert ist, kann die Schnittstelle zu der übergeordneten Steuereinrichtung entfallen. Die Busschnittstellen 42-1, 42-2 und 44-1, 44-2 sind in der Figur jeweils durch ihre Empfangs-(RX)-Anschlüsse 42-1 und 44-1 und ihre Sende-(TX)-Anschlüsse 42-2 und 44-2 repräsentiert. Die Einrichtung 40 umfasst ferner einen Datenprozessor 48, eine erste und eine zweite Datenempfangseinheit 50, 52, eine Datensendeeinheit 54 und drei Timereinrichtungen 56, 58, 60 sowie eine Linienauswahl-Logik 62. Der Datenprozessor 48 kann ein an sich üblicher Controller für die Feldbus-Kommunikation sein, der die Buszugriffssteuerung auf der Sicherungsschicht FDL (Fieldbus Data Link) durchführt. In dem gewählten Ausführungsbeispiel eines PROFIBUS-Netzes arbeitet der Datenprozessor das Buszugriffsprotokoll und höhere Protokollschichten, d.h. ab Schicht 3 gemäß dem OSI-Schichtmodell, einschließlich der notwendigen Überprüfungen ab. Die Überprüfung auf Protokollverletzungen, welche die Schicht 2 des Protokolls gemäß dem OSI-Schichtmodell betreffen, d.h. in einem PROFIBUS-Netz die FDL-Schicht, erfolgt in den Datenempfangseinheiten 50, 52. Die Datenempfangseinheiten 50, 52 sind an sich bekannte Telegramm-Empfangseinheiten, die anders als im Stand der Technik in der erfindungsgemäßen Einrichtung 40 jedoch doppelt vorgesehen sind und parallel arbeiten. Jeder der Datenempfangseinheiten 50, 52 ist jeweils ein eigener Netzwerk-Timer 56, 58 zugeordnet. Ein weiterer Protokoll-Timer 60 ist für den Datenprozessor 48 vorgesehen. Je nach verwendetem Protokoll kann auch mehr als ein Timer pro Linie vorgesehen sein. Im vorliegenden Ausführungsbeispiel werden für einen PROFIBUS-Master vorzugsweise drei Timer pro Linie vorgesehen, während für einen PROFIBUS-Slave ein Timer pro Linie ausreichend ist. Die Datensendeeinheit 54 ist wiederum eine an sich bekannte Datensendeeinrichtung eines Feldgerätes. Da die Datenempfangseinheiten und zugehörigen Timer doppelt ausgeführt sind und parallel arbeiten, ist es nicht notwendig, einen zusätzlichen Kommunikationskanal zum Austausch von Daten zwischen diesen einzurichten und ein solcher ist auch nicht vorgesehen.

Die erfindungsgemäße Einrichtung 40 arbeitet wie folgt: Zu einem beliebigen Zeitpunkt werden auf der Linie A 42-1 und der Linie B 44-1 jeweils ein Datenpaket RxD_A bzw. RxD_B empfangen, wobei das Datenpaket RxD_A auf der Linie A von der ersten Datenempfangseinheit 50 und das Datenpaket RxD_Bauf der Linie B 44 von der zweiten Datenempfangseinheit 52 empfangen und gepuffert wird. Nach dem Empfang eines vollständigen Datenpaketes RxD wird dieses in den jeweiligen Datenempfangseinheiten 50, 52 auf Korrektheit bzw. Verletzung des Schicht 2-Protokolls überprüft, und die Datenempfangseinheiten 50, 52 leiten einerseits das empfangene Datenpaket FRM_Data_A bzw. FRM_Data_B an den Datenprozessor 48 weiter, andererseits geben sie zusätzlich Statussignale aus, die angeben, ob ein Datenpaket korrekt empfangen wurde. In dem gezeigten Ausführungsbeispiel umfassen diese Statussignale FRM_OK_A bzw. FRM_OK_B zur Signalisierung des korrekten Empfangs eines Datenpakets, FRM_ERR_A bzw. FRM_ERR_B zur Signalisierung eines fehlerhaften Empfangs eines Datenpakets sowie TMR_EXP_A bzw. TMR_EXP_B zur Signalisierung einer Zeitüberschreitung des zugehörigen Netzwerk-Timers 56 bzw. 58.

In dem gezeigten Ausführungsbeispiel werden das empfangene Datenpaket und die Statussignale an die Linienauswahl-Logik 62 übergeben, die in der Praxis als Teil des Datenprozessors 48 implementiert sein kann, zur Verdeutlichung der Erfindung jedoch separat dargestellt ist. Die Linienauswahl-Logik 62 wählt das Datenpaket FMR_DATA_A oder FMR_DATA_B für die weitere Verarbeitung aus, das fehlerfrei ist und als erstes von der Linienauswahl-Logik 62 empfangen wird, und leitet dieses sowie die Statussignale zur weiteren Verarbeitung in dem Datenprozessor 48 weiter. Diese Weiterleitung erfolgt praktisch ohne irgendeine zusätzliche Verzögerung. Der Datenprozessor 48 erhält das Paket so, wie es von einer der Datenempfangseinheiten 50, 52 ausgegeben wurde. Zusätzlich kann in der Linienauswahl-Logik 62 eine Fehlerstatistik geführt werden, die festhält, welche Linien A oder B wann und wie oft ausgewählt wurde und welche Arten von Fehlern wie oft auf welcher Linie aufgetreten sind.

Sofern eines der über die Linien A und B empfangenen Datenpakete FPM_DATA_A oder FRM_DATA_B eine Protokollverletzung aufweist, wird schlichtweg das jeweils andere Datenpaket für die weitere Verarbeitung der übermittelten Daten verwendet, welche Statusdaten, Steuerungsdaten, Parameter etc. enthalten können. Sofern keines der auf den Linien A und B empfangenen Datenpakete Protokollverletzungen aufweist, wird das Datenpaket für die weitere Verarbeitung ausgewählt, das als erstes von einer der Datenempfangseinheit 50, 52 weitergeleitet wurde. Das nicht ausgewählte Paket wird verworfen.

Sofern beide Datenpakete genau gleichzeitig bei der Linienauswahl-Logik 62 ankommen und fehlerfrei sind, wird dieselbe Linie wie beim letzten Paket ausgewählt. Wenn also der Datenverkehr auf beiden Linien A und B des redundanten Datenbusses störungsfrei ist, wird immer das zuerst ankommende Datenpaket für die Weiterverarbeitung verwendet, und es ist möglich, dass bei dem erfindungsgemäßen Verfahren für jeden Datenblock eine andere Linie A oder B als Empfangslinie ausgewählt wird. Die Linienauswahl ist unabhängig davon, ob auf einer bestimmten Linie in der Vergangenheit mehr Störungen festgestellt wurden oder nicht.

Nach dem Empfang und der Abarbeitung eines Datenpakets sendet die Busteilnehmer-Einrichtung 40 in der Regel ein Antwortpaket, wobei dies über die Datensendeeinheit 54 parallel auf beiden Linien A und B erfolgt. Zur Steuerung des Buszugriffs sendet hierfür der Datenprozessor 48 die zu sendenden Daten TXM_DATA sowie ein Buszugriffs-Signal TXM_STRT an die Datensendeeinheit 54, die dann die Sendedaten TXT_A und TXT_B und eine Buszugriffs-Anfrage (request to send) RTS_A und RTS_B auf beiden Linien A und B des Feldbusses ausgibt.

Um die Datenkommunikation ohne Verzögerung parallel über die beiden Datenempfangseinheiten 50 und 52 und über die Datensendeeinheit 54 abzuwickeln, ist erfindungsgemäß jeder Datenempfangseinheit 50, 52 wenigstens eine eigene Timereinrichtung 56, 58 zugeordnet, wobei die beiden Timer 56, 58 unabhängig voneinander, asynchron laufen. Für das Senden von Daten über die Datensendeeinheit 54 wird jeweils die Timereinrichtung ausgewählt, die der zuvor ausgewählten Datenempfangseinheit 50 oder 52 zugeordnet war. Die erfindungsgemäße Steuerung der Datensendeeinheit 54 mit der Timereinrichtung der ausgewählten Datenempfangseinheit stellt sicher, dass die von dem Datenaustauschprotokoll vorgegebenen Zeiten für das Senden von Antwortsignalen genau für die ausgewählte Empfangslinie eingehalten werden, d.h. bei störungsfreiem Empfang der Datenpakete für die schnellere Datenlinie. Dadurch ergibt sich eine weitere Optimierung der Leistungsfähigkeit des Feldbussystems.

Die erfindungsgemäße Einrichtung 40 nutzt auch die in Feldgeräten üblicherweise implementierte Bitratenerkennung für die Steuerung der Kommunikation über die Datenempfangs- und Sendeeinheiten 50, 52 und 54.

Während das eingangs beschriebene, bekannte Verfahren von ABB zur Linienauswahl nur den ersten Charakter oder das erste Byte eines Datenblocks auswertet, wird erfindungsgemäß ein vollständiger Datenframe also ein vollständiges Datenpaket, das eine große Anzahl von Bytes enthält, ausgewertet, um zu entscheiden, über welche Linie die Daten empfangen werden. Dadurch wird das Verfahren deutlich zuverlässiger.

Die Erfindung hat den zusätzlichen Vorteil, dass sie auch eine Auswertung der Qualität der Übertragungsleitungen A und B erlaubt, beispielsweise in einer nachgeschalteten CPU, wenn der Datenprozessor 48 bzw. die Linienauswahl-Logik 62 z.B. die Historie der verwendeten Linien A und B als Empfangslinien aufzeichnet. Darüberhinaus ist es zu Diagnosezwecken möglich, einzelne Datenempfangseinheiten 50 oder 52 zu deaktivieren und Daten nur über eine der Linien A und B zu empfangen. Die Datensendeeinheit ist gegenüber bekannten Einrichtungen weitgehend unverändert.

Die in der vorstehenden Beschreibung, den Ansprüchen und den Figuren offenbarten Merkmale können für die Verwirldichung der Erfindung in ihren verschiedenen Ausgestaltungen sowohl einzeln als auch in beliebiger Kombination von Bedeutung sein.

### Bezugszeichenliste

- 10: Datenbus
- 12, 14: Buslinie A, B
- 16,18,20: Busteilnehmereinrichtung
- 22, 24, 26, 28, 30, 32: Datenempfangseinheit
- 40: Busteilnehmereinrichtung
- 42,44: Buskommunikationsschnittstellen
- 46: PC-Schnittstelle
- 48: Datenprozessor
- 50,52: Datenempfangseinheit
- 54: Datensendeeinheit
- 56, 58, 60: Timereinrichtung

## Patentansprüche

1. Busteilnehmer-Einrichtung (16, 18, 20; 40) zum Anschluss an einen linienredundanten, seriellen Datenbus (10), über den Daten nach einem vorgegebenen Protokoll ausgetauscht werden, mit folgenden Merkmalen:
eine Datensendeeinheit (54),
wenigstens zwei Datenempfangseinheiten (50, 52), die parallel geschaltet sind,
eine Linienauswahl-Logik (62), und
wenigstens zwei Buskommunikations-Schnittstellen (42, 44) zur Verbindung mit einer entsprechenden Anzahl von Linien des Datenbusses (10),
wobei jede der Datenempfangseinheiten (50, 52) über eine zugeordnete Buskommunikations-Schnittstelle (42, 44) mit einer zugeordneten Linie des Datenbusses (10) verbindbar ist und
Mittel zum Empfangen eines Datenblocks von der zugeordneten Linie des Datenbusses (10) und Mittel zum Weiterleiten des empfangenen Datenblocks an die Linienauswahl-Logik (62) aufweist, und wobei die Linienauswahl-Logik (62) Mittel zum Auswählen einer Linie des Datenbusses (10) als Empfangslinie und Weiterleiten des über die ausgewählte Empfangslinie empfangenen Datenblocks aufweist,
**gekennzeichnet durch**:
wenigstens zwei Timereinrichtungen (56, 58), die den wenigstens zwei Datenempfangseinheiten (50, 52) zugeordnet sind,
wobei die Datensendeeinheit (54) über die Buskommunikations-Schnittstellen (42, 44) mit den Linien des Datenbusses (10) verbindbar ist und die Linienauswahl-Logik (62) dazu eingerichtet ist, abhängig von dem Ergebnis der Auswahl einer der Linien als Empfangslinie der Datensendeeinheit (54) die Timereinrichtung (56, 58) zuzuordnen, die der Datenempfangseinheit (50, 52) für die ausgewählte Empfangslinie zugeordnet ist.

2. Busteilnehmer-Einrichtung (16, 18, 20; 40) nach Anspruch 1, mit ferner einem Datenprozessor (48) zur Steuerung des Buszugriffs, wobei die Linienauswahl-Logik (62) als Teil des Datenprozessors (48) implementiert ist.

3. Busteilnehmer-Einrichtung (16, 18, 20; 40) nach einem der vorangehenden Ansprüche, wobei die Datenempfangseinheiten (50, 52) dazu eingerichtet sind, jeweils einen vollständigen Datenframe zu empfangen und zu puffern, und wobei Linienauswahl-Logik (62) dazu eingerichtet ist, erst nach der Auswertung wenigstens eines vollständigen Datenframes eine Linie des Datenbusse (10) als Empfangslinie auszuwählen, um die auf dieser Linie empfangenen Datenframes weiterzuleiten.

4. Busteilnehmer-Einrichtung (16, 18, 20; 40) nach einem der vorangehenden Ansprüche, wobei die Linienauswahl-Logik (62) dazu eingerichtet ist, bei Empfang von fehlerfreien Datenblöcken an beiden Datenempfangseinheiten (50, 52) die Linie als Empfangslinie auszuwählen, über die der zugehörige Datenblock zuerst empfangen wird.

5. Busteilnehmer-Einrichtung (16, 18, 20; 40) nach einem der Ansprüche 2 bis 4, wobei die Linienauswahl-Logik (62) dazu eingerichtet ist, bei Empfang von gestörten Datenblöcken an beiden Datenempfangseinheiten (50, 52) eine Fehlermeldung zum Datenprozessor (48) zu senden.

6. Verfahren zur Steuerung der Kommunikation eines Busteilnehmers mit einem linienredundanten, seriellen Datenbus (10), über den Daten nach einem vorgegebenen Protokoll ausgetauscht werden, wobei der Busteilnehmer einen Datenprozessor (48), eine Datensendeeinheit (54), die mit einem Datenprozessor (48) gekoppelt ist, wenigstens zwei Datenempfangseinheiten (50, 52), die parallel geschaltet und mit dem Datenprozessor (48) gekoppelt sind, und wenigstens zwei Buskommunikations-Schnittstellen (42, 44) zur Verbindung mit einer entsprechenden Anzahl von Linien des Datenbusses (10) aufweist, mit folgenden Verfahrensschritten:
Empfangen eines Datenblocks an jeder Datenempfangseinheit (50, 52) über eine zugeordnete Buskommunikations-Schnittstelle (42, 44),
Auswerten der von den Datenempfangseinheiten (50, 52) empfangenen Datenblöcke in dem Busteilnehmer und Auswählen einer Linie des Datenbusses (10) als Empfangslinie abhängig von dem Ergebnis der Auswertung, und
Weiterleiten des über die ausgewählte Empfangslinie empfangenen Datenblocks von der entsprechenden Datenempfangseinheit an den Datenprozessor,
**dadurch gekennzeichnet, dass** bei dem Busteilnehmer den wenigstens zwei Datenempfangseinheiten (50, 52) wenigstens zwei Timereinrichtungen (56, 58) zugeordnet sind und die Datensendeeinheit (54) über die Buskommunikations-Schnittstellen (42, 44) mit den Linien des Datenbusses (10) verbindbar ist,
wobei das Verfahren weiterhin aufweist:
Zuordnen der Timereinrichtung (56, 58) zu der Datensendeeinheit (54) abhängig von dem Ergebnis der Auswahl einer der Linien als Empfangslinie, wobei der Datensendeeinheit (54) die Timereinrichtung (56, 58) zugeordnet wird, die der Datenempfangseinheit (50, 52) für die ausgewählte Empfangslinie zugeordnet ist.

7. Verfahren nach Anspruch 6, wobei die Datenempfangseinheiten (50, 52) die empfangen Datenblöcke auswerten und ein Datenblock-Statussignal (FRM_OK_A, FRM_ERR_A, FRM_OK_B, FRM_ERR_B) ausgeben, wobei die Datenblöcke insbesondere in Bezug auf Protokollverletzungen ausgewertet werden.

8. Verfahren nach einem der Ansprüche 6 bis 7, wobei die Datenempfangseinheiten (50, 52) jeweils einen vollständigen Datenframe empfangen und auswerten und an eine Linienauswahl-Logik (62) weiterleiten und wobei erst nach der Auswertung wenigstens eines vollständigen Datenframes eine Linie des Datenbusses (10) als Empfangslinie ausgewählt wird.

9. Verfahren nach einem der Ansprüche 6 bis 8, wobei jedem Busteilnehmer genau eine Busadresse zugeordnet wird.

10. Verfahren nach einem der Ansprüche 6 bis 9, wobei bei Empfang von fehlerfreien Datenblöcken an beiden Datenempfangseinheiten (50, 52) die Linie als Empfangslinie ausgewählt wird, über die der zugehörige Datenblock zuerst empfangen wird.

11. Verfahren nach einem der Ansprüche 6 bis 10, wobei bei Empfang von gestörten Datenblöcken an beiden Datenempfangseinheiten (50, 52) eine Fehlermeldung zum Datenprozessor (48) gesendet wird.

12. Verfahren nach einem der Ansprüche 6 bis 11, wobei der Datenprozessor (48) eine Bitratenerkennung durchführt.

13. Verfahren nach einem der Ansprüche 6 bis 12, wobei zu Diagnose- und Testzwecken eine der Datenempfangseinheiten (50, 52) deaktiviert wird.

14. Verfahren nach einem der Ansprüche 6 bis 13, wobei ein Datenblock einem Datenpaket entspricht, insbesondere einen Datenframe gemäß der PROFIBUS-Norm.

## Claims

1. A bus subscriber device (16, 18, 20; 40) for connection to a line-redundant serial data bus (10), over which data is exchanged according to a predefined protocol, comprising the following features:
a data transmission unit (54),
at least two data receiving units (50, 52) that are connected in parallel,
a line selection logic (62), and
at least two bus communication interfaces (42, 44) for connecting to a corresponding number of lines of the data bus (10),
wherein each of the data receiving units (50, 52) is connectable via an associated bus communication interface (42, 44) to an assigned line of the data bus (10) and comprises means for receiving a data block from the associated line of the data bus (10) and means for forwarding the received data block to the line selection logic (62), and wherein the line selection logic (62) comprises means for selecting a line of the data bus (10) as a receiving line and forwarding the received data block over the selected receiving line,
**characterized by**:
at least two timer devices (56, 58) that are associated with the at least two data receiving units (50, 52),
wherein the data transmission unit (54) is connectable via the bus communication interfaces (42, 44) to the lines of the data bus (10) and the line selection logic (62) is configured to assign, dependent on the result of the selection of one of the lines as receiving line of the data transmission unit (54), the timer device (56, 58), which is assigned to the data receiving unit (50, 52) for the selected receiving line.

2. The bus subscriber device (16, 18, 20; 40) according to claim 1, further comprising a data processor (48) for controlling the bus access, wherein the line selection logic (62) is implemented as part of the data processor (48).

3. The bus subscriber device (16, 18, 20; 40) according to one of the preceding claims, wherein the data receiving units (50, 52) are configured to respectively receive and buffer a complete data frame, and wherein the line selection logic (62) is configured to select one line of the data busses (10) as a receiving line only after the evaluation of at least one complete data frame, in order to forward the data frames received on this line.

4. The bus subscriber device (16, 18, 20; 40) according to one of the preceding claims, wherein the line selection logic (62) is configured to, when receiving accurate data blocks on both data receiving units (50, 52), select the line over which the respective data block was received first as receiving line.

5. The bus subscriber device (16, 18, 20; 40) according to one of claims 2 to 4, wherein the line selection logic (62) is configured to, when receiving corrupted data blocks on both data receiving units (50, 52), transmit an error message to the data processor (48).

6. A method for controlling the communication of a bus subscriber with a line-redundant serial data bus (10), over which data is exchanged according to a predefined protocol, wherein the bus subscriber comprises a data processor (48), a data transmission unit (54), which is coupled to a data processor (48), at least two data receiving units (50, 52), which are connected in parallel, and coupled to the data processor (48), and at least two bus communication interfaces (42, 44) for connecting to a respective number of lines of the data bus (10), comprising the following method steps:
receiving a data block at each data receiving unit (50, 52) via an associated bus communication interface (42, 44),
analyzing the received data blocks from the data receiving units (50, 52) at the bus subscriber and selecting one line of the data bus (10) as receiving line, dependent on the result of the analysis, and
forwarding the data block received via the selected receiving line from the respective data receiving unit to the data processor,
**characterized in that** at the bus subscriber, the at least two data receiving units (50, 52) are associated with at least two timer devices (56, 58) and the data receiving unit (54) is connectable to the lines of the data bus (10) via the bus communication interfaces (42, 44),
wherein the method further comprises:
assigning the timer device (56, 58) to the data receiving unit (54), dependent on the result of the analysis of one of the lines as receiving line, wherein the data transmission unit (54) is assigned to the timer device (56, 58) that is assigned to the data receiving unit (50, 52) for the selected receiving line.

7. The method according to claim 6, wherein the data receiving units (50, 52) analyze the data blocks received and output a data block status signal (FRM_OK_A, FRM_ERR_A, FRM_OK_B, FRM_ERR_B), wherein the data blocks are particularly analyzed with respect to protocol violations.

8. The method according to one of claims 6 to 7, wherein the data receiving units (50, 52) respectively receive and analyze a complete data frame and forward the data frame to a line selection logic (62), and wherein only after the analysis of at least one complete data frame, a line of the data bus (10) is selected as receiving line.

9. The method according to one of claims 6 to 8, wherein each bus subscriber is exactly assigned one bus address.

10. The method according to one of claims 6 to 9, wherein, when receiving accurate data blocks at both data receiving units (50, 52), the line over which the respective data block was received first is selected as the receiving line.

11. The method according to one of claims 6 to 10, wherein, when receiving corrupted data blocks at both data receiving units (50, 52), an error message is sent to the data processor (48).

12. The method according to one of claims 6 to 11, wherein the data processor (48) conducts a bit rate determination.

13. The method according to one of claims 6 to 12, wherein for diagnosis and test purposes, one of the data receiving units (50, 52) is deactivated.

14. The method according to one of claims 6 to 13, wherein a data block corresponds to a data packet, in particular a data frame according to the PROFIBUS standard.

## Revendications

1. Système pour participants à un bus (16, 18, 10 ; 40) destiné à être raccordé à un bus de données (10) série à lignes redondantes, par l'intermédiaire duquel des données sont échangées selon un protocole prédéfini, comprenant les caractéristiques suivantes :
une unité d'envoi de données (54),
au moins deux unités de réception de données (50, 52), qui sont montées en parallèle,
une logique de sélection de ligne (62), et
au moins deux interfaces de communication de bus (42, 44) destinées à être reliées à un nombre correspondant de lignes du bus de données (10),
dans lequel chacune des unités de réception de données (50, 52) peut être reliée par l'intermédiaire d'une interface de communication de bus (42, 44) associée, à une ligne associée du bus de données (10), et présente des moyens servant à recevoir un bloc de données provenant de la ligne associée du bus de données (10) et des moyens servant à transférer le bloc de données reçu à la logique de pour participants à un bus (62), et dans lequel la logique de sélection de ligne (62) présente des moyens servant à sélectionner une ligne du bus de données (10) en tant que ligne de réception et servant à transférer le bloc de données reçu par l'intermédiaire de la ligne de réception sélectionnée,
**caractérisé par** :
au moins deux systèmes temporisateurs (56, 58) qui sont associés aux deux unités de réception de données (50, 52) ou plus,
dans lequel l'unité d'envoi de données (54) peut être reliée, par l'intermédiaire des interfaces de communication de bus (42, 44), aux lignes du bus de données (10) et la logique de sélection de ligne (62) est configurée afin d'associer, en fonction du résultat de la sélection de l'une des lignes en tant que ligne de réception, le système temporisateur (56, 58) à l'unité d'envoi de données (54), lequel système temporisateur est associé à l'unité de réception de données (50, 52) pour la ligne de réception sélectionnée.

2. Système pour participants à un bus (16, 18, 20 ; 40) selon la revendication 1, comprenant en outre un processeur de données (48) servant à commander l'accès au bus, dans lequel la logique de sélection de ligne (62) est implémentée en tant que partie intégrante du processeur de données (48).

3. Système pour participants à un bus (16, 18, 20 ; 40) selon l'une quelconque des revendications précédentes, dans lequel les unités de réception de données (50, 52) sont configurées afin de recevoir et de mettre en tampon respectivement une trame de données complète, et dans lequel la logique de sélection de ligne (62) est configurée afin de sélectionner, seulement après analyse d'au moins une trame de données complète, une ligne de bus de données (10) en tant que ligne de réception afin de transférer les trames de données reçues sur ladite ligne.

4. Système pour participants à un bus (16, 18, 20 ; 40) selon l'une quelconque des revendications précédentes, dans lequel la logique de sélection de ligne (62) est configurée afin de sélectionner, lors de la réception de blocs de données sans erreur au niveau des deux unités de réception de données (50, 52), la ligne en tant que ligne de réception, par l'intermédiaire de laquelle le bloc de données associé est reçu dans un premier temps.

5. Système pour participants à un bus (16, 18, 20 ; 40) selon l'une quelconque des revendications 2 à 4, dans lequel la logique de sélection de ligne (62) est configurée afin d'envoyer, dans le cas de la réception de blocs de données endommagés au niveau des deux unités de réception de données (50, 52), un message d'erreur au processeur de données (48).

6. Procédé servant à commander la communication d'un participant à un bus à l'aide d'un bus de données (10) série à lignes redondantes, par l'intermédiaire duquel des données sont échangées selon un protocole prédéfini, dans lequel le participant au bus comporte un processeur de données (48), une unité d'envoi de données (54) qui est couplée à un processeur de données (48), au moins deux unités de réception de données (50, 52) qui sont branchées en parallèle et qui sont couplées au processeur de données (48), et au moins deux interfaces de communication de bus (42, 44) destinées à être reliées à un nombre correspondant de lignes du bus de données (10), comprenant les étapes de procédé suivantes :
recevoir un bloc de données au niveau de chaque unité de réception de données (50, 52) par l'intermédiaire d'une interface de communication de bus (42, 44) associée, analyser les blocs de données reçus par les unités de réception de données (50, 52) dans le participant au bus et sélectionner une ligne du bus de données (10) en tant que ligne de réception en fonction du résultat de l'analyse, et
transférer le bloc de données reçu par l'intermédiaire de la ligne de réception sélectionnée, de l'unité de réception de données correspondante au processeur de données,
**caractérisé en ce qu'**au niveau du participant au bus au moins deux systèmes temporisateurs (56, 58) sont associés aux deux unités de réception de données (50, 52) ou plus, et **en ce que** l'unité d'envoi de données (54) peut être reliée par l'intermédiaire des interfaces de communication de bus (42, 44) aux lignes du bus de données (10),
dans lequel le procédé comprend en outre les étapes suivantes :
associer le système temporisateur (56, 58) à l'unité d'envoi de données (54) en fonction du résultat de la sélection d'une des lignes en tant que ligne de réception,
dans lequel le système temporisateur (56, 58) est associé à l'unité d'envoi de données (54), lequel est associé à l'unité de réception de données (50, 52) pour la ligne de réception sélectionnée.

7. Procédé selon la revendication 6, dans lequel les unités de réception de données (50, 52) analysent les blocs de données reçus et émettent un signal de statut de bloc de données (FRM_OK_A, FRM_ERR_A, FRM_OK_B, FRM_ERR_B), dans lequel les blocs de données sont analysés en particulier en termes de violations de protocole.

8. Procédé selon l'une quelconque des revendications 6 à 7, dans lequel les unités de réception de données (50, 52) reçoivent et analysent respectivement une trame de données complète et la transfèrent à une logique de sélection de ligne (62) et dans lequel, seulement après l'analyse au moins d'une trame de données complète, une ligne du bus de données (10) est sélectionnée en tant que ligne de réception.

9. Procédé selon l'une quelconque des revendications 6 à 8, dans lequel une adresse de bus est précisément associée à chaque participant au bus.

10. Procédé selon l'une quelconque des revendications 6 à 9, dans lequel, lors de la réception de blocs de données sans erreur au niveau des deux unités de réception de données (50, 52), la ligne est sélectionnée en tant que ligne de réception par l'intermédiaire de laquelle le bloc de données associé est reçu dans un premier temps.

11. Procédé selon l'une quelconque des revendications 6 à 10, dans lequel, en cas de réception de blocs de données endommagés au niveau des deux unités de réception de données (50, 52), un message d'erreur est envoyé au processeur de données (48).

12. Procédé selon l'une quelconque des revendications 6 à 11, dans lequel le processeur de données (48) exécute une identification de débit binaire.

13. Procédé selon l'une quelconque des revendications 6 à 12, dans lequel l'une des unités de réception de données (50, 52) est désactivée à des fins de diagnostic et de test.

14. Procédé selon l'une quelconque des revendications 6 à 13, dans lequel un bloc de données correspond à un paquet de données, en particulier une trame de données selon la norme PROFIBUS.
